# EUROPEAN PATENT SPECIFICATION

(11) **EP 4 248 549 B1**
(45) Date of publication and mention of the grant of the patent: **31.07.2024**
(21) Application number: 20812016.2
(22) Date of filing: 23.11.2020
(51) Int. Cl.: H02K 1/30, H02K 1/2733

(54) **PERMANENT-MAGNETIC ROTOR ARRANGEMENT**
PERMANENTMAGNETISCHE ROTORANORDNUNG
AGENCEMENT DE ROTOR À AIMANT PERMANENT

(43) Date of publication of application: 27.09.2023
(73) Proprietor: Pierburg GmbH, 41460 Neuss (DE)
(72) Inventor: SUSWEDYK, Martin, 41460 Neuss (DE); ZILL, Mathias, 41460 Neuss (DE); HENKE, Toni, 41460 Neuss (DE)
(74) Representative: terpatent PartGmbB
(86) International application number: PCT/EP2020/083076
(87) International publication number: WO 2022/106039

(56) References cited:
- DE-A1- 10 153 433
- JP-A- 2020 114 091

## Description

The present invention is directed to a permanent-magnetic rotor arrangement, in particular to a permanent-magnetic rotor arrangement for an electric motor.

DE 103 07 231 A1 discloses an electric motor with a typical permanent-magnetic rotor arrangement. The permanent-magnetic rotor arrangement comprises a ring-shaped magnet holder which is made of a soft-magnetic material and which is attached to a rotor shaft of the electric motor, and comprises a permanent-magnetic ring magnet which is molded onto the radial outside surface of the magnet holder. It is also common practice to attach the ring magnet to the magnet holder frictionally, adhesively or by form-fit. In any case, the radial inside surface of the ring magnet is generally in direct, large-area contact with the radial outside surface of the magnet holder.

Because the ring magnet and the magnet holder are typically made of materials with different thermal expansion coefficients, temperature changes can cause a relatively great tension inside the rotor arrangement, in particular inside the ring magnet which radially encloses the magnet holder. Depending on the material of the ring magnet, the thermal-expansion-induced tension inside the ring magnet can cause cracks inside the ring magnet which deteriorate the efficiency of the electric motor or can even lead to a disruption of the rotor arrangement. The rotor arrangement of DE 103 07 231 A1 therefore requires a mechanically relatively robust and thus expensive ring magnet to provide a reliable rotor arrangement.

An object of the present invention is therefore to provide a reliable and inexpensive permanent-magnetic rotor arrangement.

DE 101 53 433 A1 discloses a rotor that minimizes stress in a magnet ring in case of thermal elongation. This rotor comprises outslide slits that extend radially inwards.

This object is achieved with a permanent-magnetic rotor arrangement with the features of claim 1.

The permanent-magnetic rotor arrangement according to the present invention is provided with a ring-shaped magnet holder which is made of a soft-magnetic material and which is configured to be attached to a rotor shaft. The terms "ring-shaped" and "ring" in the present context are explicitly not limited to circular-ring-shaped objects but can generally refer to any object which radially encloses an axial opening. The magnet holder however is preferably circular-ring-shaped with a substantially circular outside contour and a central substantially circular opening for the rotor shaft. The magnet holder is typically made of iron or an iron alloy. However, the magnet holder can also be made of any other soft-magnetic material, i.e. made of any material with a coercivity of less than 1 kA/m. The magnet holder is typically configured to be frictionally or adhesively attached to the radial outside surface of the rotor shaft.

The permanent-magnetic rotor arrangement according to the present invention is also provided with a permanent-magnetic ring magnet which is attached to the radial outside surface of the magnet holder. The ring magnet is preferably circular-ring shaped with a substantially circular outside contour and a central substantially circular opening for the magnet holder. In any case, the opening contour of the ring magnet corresponds to the outside contour of the magnet holder. The ring magnet is typically provided with a plurality of magnetic poles along its circumference, wherein circumferentially adjacent magnetic poles have opposite magnetic polarities. The ring magnet is preferably frictionally or adhesively attached to the radial outside surface of the magnet holder.

According to the present invention, the magnet holder is provided with a plurality of inside radial slits which extend radially outward from the radial inside surface of the magnet holder, and is provided with a plurality of outside radial slits which extend radially inward from the radial outside surface of the magnet holder. Each radial slit has a length in radial direction which is significantly larger than its width in circumferential direction, wherein the radial length of each radial slit is preferably at least three times its circumferential width. All radial slits preferably end inside the magnet holder, i.e. the radial length of the radial slits is smaller than the radial width of the magnet holder. The closed-end of the radial slits is preferably rounded so as to provide a relatively homogeneous magnetic field in the magnet holder. The radial slits are typically filled with air or another gas. It is however also possible that the radial slits are filled with a compressible solid.

The radial slits according to the present invention form a "compressible volume" which allows the magnet holder to expand in the circumferential direction without causing a significant tension in the surrounding ring magnet. The inside radial slits form a compressible volume at the radially inner region of the magnet holder and the outside radial slits form a compressible volume at the radially outer region of the magnet holder. The total compressible volume allows the magnet holder to expand relatively unhindered in the circumferential direction and thus reduces the radial expansion of the magnet holder. The radial slits according to the present invention therefore significantly reduce the thermal-expansion-induced tension in the ring magnet which radially surrounds the magnet holder. This allows the ring magnet to be made of relatively inexpensive material such as, for example, polymer-bonded ferrite without the risk of thermal-expansion-induced efficiency losses or disruption. The magnet holder with the radial slits according to the present invention therefore allows to provide a reliable and inexpensive permanent-magnetic rotor arrangement.

In a preferred embodiment of the present invention, the sum of the radial length of one inside radial slit and the radial length of one outside radial slit is larger than the radial width of the magnet holder. More preferably, all radial slits are provided with a radial length which is larger than half the radial width of the magnet holder. The inside radial slit and the outside radial slit therefore overlap with respect to a radial direction so that both radial slits together provide a compressible volume along the entire radial width of the magnet holder. This allows the magnet holder to circumferentially expand along its entire radial width which, as a result, reduces the radial expansion of the magnet holder and thus ensures a relatively low tension in the ring magnet which radially surrounds the magnet holder.

Preferably, the number of inside radial slits is equal to the number of outside radial slits. More preferably, the inside radial slits and the outside radial slits are arranged alternately along the circumference of the ring-shaped magnet holder. The alternately arranged inside radial slits and outside radial slits define a meandering structure in the circumferential direction. The meandering structure allows to provide the magnet holder with a relatively large compressible volume without significantly impairing the magnetic flux inside the magnet holder and the mechanical stability of the magnet holder. The meandering structure furthermore provides a relatively homogeneous distribution of the compressible volume with respect to the circumferential direction of the magnet holder. This provides a relatively homogeneous expansion of the magnet holder in the circumferential direction and thus minimizes the radial expansion of the magnet holder.

The permanent-magnetic ring magnet is typically provided with a plurality of circumferentially adjacent magnetic poles. The magnetic flux caused by the ring magnet radially enters the magnet holder at a magnetic north pole, then splits up so as to permeate the magnet holder in both circumferential directions toward the two circumferentially adjacent magnetic south poles, and finally radially leaves the magnet holder at the magnetic south poles. In a preferred embodiment of the present invention, each inside radial slit is therefore located at the same circumferential position as a pole centerline of one of the magnetic poles so that the magnetic flux is split up into both circumferential directions relatively uniformly at a magnetic north pole and/or is merged efficiently at a magnetic south pole. This provides a permanent-magnetic rotor arrangement with a relatively homogenous rotor magnetic field which can be driven by an electromagnetic motor stator relatively efficiently and smoothly and thus allows to provide an efficient and reliable electric motor.

More preferably, the number of magnetic poles of the ring magnet is equal to the number of inside radial slits so that the magnetic flux is uniformly split up at each magnetic north pole of the ring magnet and is efficiently merged at each magnetic south pole of the ring magnet. This provides a permanent-magnetic rotor arrangement which can be driven very efficiently and smoothly.

In a preferred embodiment of the present invention, the magnet holder is composed of a stack of identically shaped and oriented metal sheets which are stacked in the axial direction. The metal sheets are typically manufactured by punching which allows the metal sheets and thus the complete magnet holder to be easily provided with the radial slits according to the present invention. Punching also allows the radial slits to be defined very accurately. This allows the magnet holder to be manufactured relatively accurately and inexpensive. The stacked metal sheets furthermore provide significantly lower unfavorable eddy currents inside the magnet holder compared to a massive magnet holder. This provides a permanent-magnetic rotor arrangement which can be driven very efficiently.

Preferably, the ring magnet is monolithic, i.e. the ring magnet is composed of one single piece. The monolithic ring magnet can be manufactured relatively easily and inexpensively, for example by casting. Because the monolithic ring magnet has no joining surfaces, the monolithic ring magnet is also relatively insensitive to internal tension. This provides a reliable and inexpensive permanent-magnetic rotor arrangement.

An embodiment of the present invention is described with reference to the enclosed drawings, wherein
figure 1 shows a top view of a permanent-magnetic rotor arrangement according to the present invention, and
figure 2 shows a longitudinal section of the permanent-magnetic rotor arrangement of figure 1, the sectional plane being indicated in figure 1 by the line II-II.

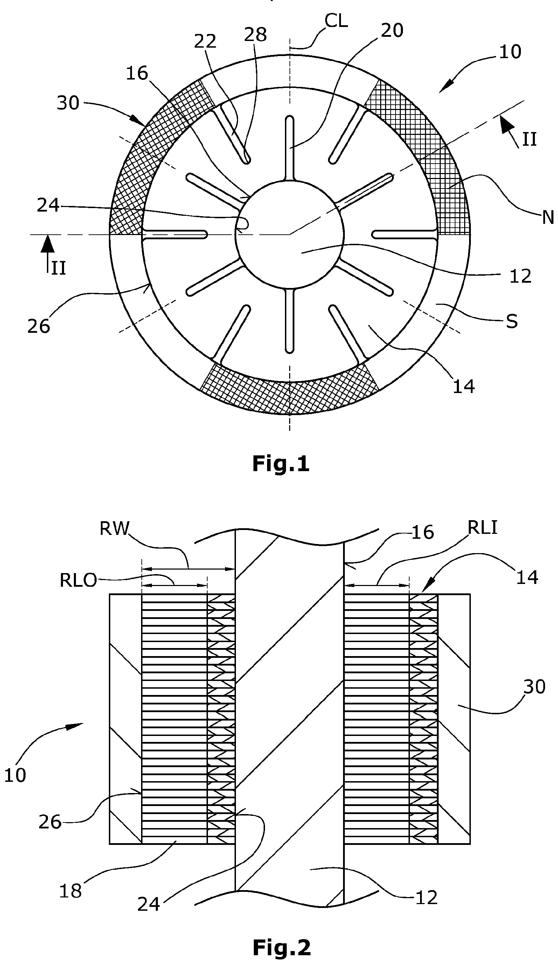

Fig. 1 shows a permanent-magnetic rotor arrangement 10 which is co-rotatably attached to a rotor shaft 12.

The permanent-magnetic rotor arrangement 10 comprises a ring-shaped magnet holder 14 which radially surrounds the rotor shaft 12 and which is co-rotatably attached to the radial outside surface 16 of the rotor shaft 12. The magnet holder 14 is composed of a stack of metal sheets 18, in particular composed of a stack of soft-magnetic electrical sheets. The metal sheets 18 are identically shaped and oriented and are stacked in the axial direction of the rotor shaft 12.

The magnet holder 14 is provided with six inside radial slits 20 and with six outside radial slits 22. All radial slits 20,22 extend along a radial direction of the magnet holder 14 and of the rotor shaft 12. The inside radial slits 20 start at the radial inside surface 24 of the magnet holder 14 and extend radially outward. The outside radial slits 22 start at the radial outside surface 26 of the magnet holder 14 and extend radially inward. All radial slits 20,22 end inside the magnet holder 14, wherein an end section 28 of each radial slit 20,22 is provided with a curved inside surface.

The radial slits 20,22 are arranged alternately along the circumference of the magnet holder 14 so that each inside radial slit 20 is surrounded at both circumferential sides by one outside radial slit 22 and vice versa. All inside radial slits 20 are provided with a common inside radial slit length RLI, and all outside radial slits 20 are provided with a common outside radial slit length RLO which is equal to the inside radial slit length RLI. The radial slits 20,22 are in particular designed in that way that both radial slit lengths RLI,RLO are larger than half the radial width RW of the magnet holder 14 so that the sum of the inside radial slit length RLI of one inside radial slit 20 and the outside radial slit length RLO of one outside radial slit 22 is larger than the radial width RW of the magnet holder 14.

The permanent-magnetic rotor arrangement 10 comprises a permanent-magnetic ring magnet 30 which radially surrounds the magnet holder 14 and the rotor shaft 12 and which is co-rotatably attached to the radial outside surface 26 of the magnet holder 14. The ring magnet 30 is monolithic, i.e. the ring magnet 30 is composed of one single piece. The ring magnet 30, in the present embodiment, is made of polymer-bonded ferrite. The ring magnet 30 is provided with six magnetic poles N,S, wherein the three magnetic north poles N and the three magnetic south poles S are arranged alternately along the circumference of the ring magnet 30.

The magnet holder 14 and the ring magnet 30 are arranged in that way that each inside radial slit 20 is located at the same circumferential position as a pole centerline CL of one of the magnetic poles N,S of the magnet ring 30, and that each outside radial slit 22 is located at the same circumferential position as an interface between two adjacent magnetic poles N,S.

### Reference List

- 10: permanent-magnetic rotor arrangement
- 12: rotor shaft
- 14: magnet holder
- 16: rotor shaft radial outside surface
- 18: metal sheets
- 20: inside radial slits
- 22: outside radial slits
- 24: magnet holder radial inside surface
- 26: magnet holder radial outside surface
- 28: radial slit end sections
- 30: ring magnet

- CL: pole centerlines
- N: magnetic north poles
- RLI: inside radial slit length
- RLO: outside radial slit length
- RW: magnet holder radial width
- S: magnetic south poles

## Claims

1. A permanent-magnetic rotor arrangement (10) comprising
- a ring-shaped magnet holder (14) which is made of a soft-magnetic material and which is configured to be attached to a rotor shaft (12), and
- a permanent-magnetic ring magnet (30) which is attached to the radial outside surface (26) of the magnet holder (14),
wherein the magnet holder (14) is provided with
- a plurality of outside radial slits (22) which extend radially inward from the radial outside surface (26) of the magnet holder (14)
**characterized in that** the rotor additionally is provided with
- a plurality of inside radial slits (20) which extend radially outward from the radial inside surface (24) of the magnet holder (14).

2. The permanent-magnetic rotor arrangement (10) according to claim 1, wherein the sum of the radial length (RLI) of one inside radial slit (20) and the radial length (RLO) of one outside radial slit (22) is larger than the radial width (RW) of the magnet holder (14).

3. The permanent-magnetic rotor arrangement (10) according to one of the preceding claims, wherein the number of inside radial slits (20) is equal to the number of outside radial slits (22).

4. The permanent-magnetic rotor arrangement (10) according to claim 3, wherein the inside radial slits (20) and the outside radial slits (22) are arranged alternately along the circumference of the ring-shaped magnet holder (14).

5. The permanent-magnetic rotor arrangement (10) according to one of the preceding claims, wherein the ring magnet (30) is provided with a plurality of magnetic poles (N,S), and wherein each inside radial slit (20) is located at the same circumferential position as a pole centerline (CL) of one of the magnetic poles (N,S).

6. The permanent-magnetic rotor arrangement (10) according to claim 5, wherein the number of magnetic poles (N,S) of the ring magnet (30) is equal to the number of inside radial slits (20).

7. The permanent-magnetic rotor arrangement (10) according to one of the preceding claims, wherein the magnet holder (14) is composed of a stack of identically shaped and oriented metal sheets (18).

8. The permanent-magnetic rotor arrangement (10) according to one of the preceding claims, wherein the ring magnet (30) is monolithic.

## Patentansprüche

1. Permanentmagnetische Rotoranordnung (10) umfassend
- einen ringförmigen Magnethalter (14), der aus einem weichmagnetischen Material besteht und der eingerichtet ist, an einer Rotorwelle (12) befestigt zu werden, und
- einen permanentmagnetischen Ringmagneten (30), der an der radialen Außenfläche (26) des Magnethalters (14) angebracht ist,
wobei der Magnethalter (14) aufweist
- eine Vielzahl von äußeren radialen Schlitzen (22,) die sich von der radialen Außenfläche (26) des Magnethalters (14) radial nach innen erstrecken,
**dadurch gekennzeichnet, dass** der Rotor zusätzlich aufweist
- eine Vielzahl von inneren radialen Schlitzen (20,) die sich von der radialen Innenfläche (24) des Magnethalters (14) radial nach außen erstrecken.

2. Permanentmagnetische Rotoranordnung (10) nach Anspruch 1, wobei die Summe der radialen Länge (RLI) eines inneren radialen Schlitzes (20) und der radialen Länge (RLO) eines äußeren radialen Schlitzes (22) größer ist als die radiale Breite (RW) des Magnethalters (14).

3. Permanentmagnetische Rotoranordnung (10) nach einem der vorhergehenden Ansprüche, wobei die Anzahl der inneren radialen Schlitze (20) gleich der Anzahl der äußeren radialen Schlitze (22) ist.

4. Permanentmagnetische Rotoranordnung (10) nach Anspruch 3, wobei die inneren radialen Schlitze (20) und die äußeren radialen Schlitze (22) abwechselnd entlang des Umfangs des ringförmigen Magnethalters (14) angeordnet sind.

5. Permanentmagnetische Rotoranordnung (10) nach einem der vorhergehenden Ansprüche, wobei der Ringmagnet (30) eine Vielzahl von Magnetpolen (N, S) aufweist, und wobei jeder innere radiale Schlitz (20) an der gleichen Umfangsposition wie eine Polmittellinie (CL) eines der Magnetpole (N, S) angeordnet ist.

6. Permanentmagnetische Rotoranordnung (10) nach Anspruch 5, wobei die Anzahl der Magnetpole (N, S) des Ringmagneten (30) gleich der Anzahl der inneren radialen Schlitze (20) ist.

7. Permanentmagnetische Rotoranordnung (10) nach einem der vorhergehenden Ansprüche, wobei der Magnethalter (14) aus einem Stapel von gleich geformten und ausgerichteten Blechen (18) aufgebaut ist.

8. Permanentmagnetische Rotoranordnung (10) nach einem der vorhergehenden Ansprüche, wobei der Ringmagnet (30) einstückig ist.

## Revendications

1. Un arrangement de rotor à aimant permanent (10) qui comprend
- un support d'aimant annulaire (14) fabriqué dans un matériau magnétique doux et conçu pour être fixé à un arbre de rotor (12), et
- un aimant annulaire à magnétisme permanent (30) fixé à la surface extérieure radiale (26) du support d'aimant (14),
dans lequel le support d'aimant (14) est fourni avec
- d'une pluralité de fentes radiales extérieures (22) qui s'étendent radialement vers l'intérieur à partir de la surface radiale extérieure (26) du support d'aimant (14)
**caractérisé en ce que** le rotor est en outre fourni avec
- une pluralité de fentes radiales intérieures (20) qui s'étendent radialement vers l'extérieur à partir de la surface radiale intérieure (24) du support d'aimant (14).

2. L'arrangement de rotor à aimant permanent (10) selon la revendication 1, dans lequel la somme de la longueur radiale (RLI) d'une fente radiale intérieure (20) et de la longueur radiale (RLO) d'une fente radiale extérieure (22) est supérieure à la largeur radiale (RW) du support d'aimant (14).

3. L'arrangement de rotor à aimants permanents (10) selon l'une des revendications précédentes, dans lequel le nombre de fentes radiales intérieures (20) est égal au nombre de fentes radiales extérieures (22).

4. L'arrangement de rotor à aimant permanent (10) selon la revendication 3, dans lequel les fentes radiales intérieures (20) et les fentes radiales extérieures (22) sont disposées alternativement sur la circonférence du support d'aimant en forme d'anneau (14).

5. L'arrangement de rotor à aimant permanent (10) selon l'une des revendications précédentes, dans lequel l'aimant annulaire (30) est fourni avec une pluralité de pôles magnétiques (N,S), et dans lequel chaque fente radiale intérieure (20) est située à la même position circonférentielle qu'une ligne centrale des pôles (CL) de l'un des pôles magnétiques (N,S).

6. L'arrangement de rotor à aimant permanent (10) selon la revendication 5, dans lequel le nombre de pôles magnétiques (N,S) de l'aimant annulaire (30) est égal au nombre de fentes radiales intérieures (20).

7. L'arrangement de rotor à aimants permanents (10) selon l'une des revendications précédentes, dans lequel le support d'aimant (14) est composé d'un empilement de feuilles métalliques (18) de forme et d'orientation identiques.

8. L'arrangement de rotor à aimant permanent (10) selon l'une des revendications précédentes, dans lequel l'aimant annulaire (30) est monolithique.
